(19) **Europäisches Patentamt**

**European Patent Office**

**Office européen des brevets**

(11) **EP 0 873 232 B1**

(12) **FASCICULE DE BREVET EUROPEEN**

(45) Date de publication et mention
de la délivrance du brevet:
**24.05.2006 Bulletin 2006/21**

(51) Int Cl.:
*B29C 45/76* (2006.01)    *B29C 45/77* (2006.01)

(21) Numéro de dépôt: **97932868.9**

(22) Date de dépôt: **09.07.1997**

(86) Numéro de dépôt international:
**PCT/FR1997/001245**

(87) Numéro de publication internationale:
**WO 1998/001282 (15.01.1998 Gazette 1998/02)**

(54) **PROCEDE DE COMMANDE ET DE REGULATION D'UNE PRESSE DE MOULAGE PAR INJECTION**

VERFAHREN ZUR REGELUNG EINER SPRITZGIESSMASCHINE

METHOD FOR CONTROLLING AN INJECTION MOULDING PRESS

(84) Etats contractants désignés:
**AT BE CH DE DK ES FI FR GB GR IE IT LI LU MC NL PT SE**

(30) Priorité: **09.07.1996 FR 9608526**

(43) Date de publication de la demande:
**28.10.1998 Bulletin 1998/44**

(73) Titulaire: **L'ECOLE NATIONALE SUPERIEURE DES TECHNIQUES INDUSTRIELLES ET DES MINES DE DOUAI 59508 Douai Cedex (FR)**

(72) Inventeurs:
  • **RYCKEBUSCH, Marc**
    **F-59112 Annoeullin (FR)**
  • **PABIOT, José**
    **F-75013 Paris (FR)**
  • **LAURENT, Fabrice**
    **F-59310 Faumont (FR)**

(74) Mandataire: **Puiroux, Guy et al**
    **Cabinet Guiu & Bruder**
    **68, rue d'Hauteville**
    **75010 Paris (FR)**

(56) Documents cités:
    **EP-A- 0 193 719**      **EP-A- 0 737 560**
    **EP-A- 0 749 821**      **DE-A- 3 211 728**
    **DE-A- 4 108 992**      **FR-A- 2 324 441**
    **US-A- 3 642 404**      **US-A- 4 833 910**

• **PATENT ABSTRACTS OF JAPAN vol. 096, no. 002, 29 février 1996 & JP 07 276460 A (MATSUSHITA ELECTRIC WORKS LTD), 24 octobre 1995,**
• **PATENT ABSTRACTS OF JAPAN vol. 014, no. 127 (M-0947), 9 mars 1990 & JP 01 320126 A (NOK CORP), 26 décembre 1989,**
• **PATENT ABSTRACTS OF JAPAN vol. 012, no. 001 (M-656), 6 janvier 1988 & JP 62 167022 A (MITSUBISHI HEAVY IND LTD), 23 juillet 1987,**
• **PATENT ABSTRACTS OF JAPAN vol. 014, no. 361 (M-1006), 6 août 1990 & JP 02 128822 A (TOSHIBA MACH CO LTD), 17 mai 1990,**
• **PATENT ABSTRACTS OF JAPAN vol. 012, no. 087 (M-678), 19 mars 1988 & JP 62 227617 A (JAPAN STEEL WORKS LTD:THE), 6 octobre 1987,**
• **PATENT ABSTRACTS OF JAPAN vol. 014, no. 501 (M-1043), 2 novembre 1990 & JP 02 208016 A (HITACHI LTD), 17 août 1990,**
• **PATENT ABSTRACTS OF JAPAN vol. 011, no. 082 (M-571), 12 mars 1987 & JP 61 237616 A (MITSUBISHI HEAVY IND LTD), 22 octobre 1986,**
• **PATENT ABSTRACTS OF JAPAN vol. 018, no. 585 (M-1700), 9 novembre 1994 & JP 06 218780 A (JAPAN STEEL WORKS LTD:THE), 9 août 1994,**
• **"Viskositätsregelung beim Spritzgiessen" KUNSTSTOFFBERATER, vol. 23, no. 11, novembre 1978, ISERNHAGEN DE, pages 632-633, XP002028717**
• **PATENT ABSTRACTS OF JAPAN vol. 016, no. 082 (M-1215), 27 février 1992 & JP 03 266622 A (TOYO MACH & METAL CO LTD), 27 novembre 1991,**

**Description**

La présente invention concerne un procédé de commande de régulation d'une presse hydraulique destinée au moulage par injection, notamment de polymères.

Les presses utilisées dans le domaine du moulage sont habituellement actionnées par un piston qui se déplace soit sous l'action d'un fluide hydraulique sous pression, si bien que la pression d'injection exercée sur la matière à mouler est fonction de la pression hydraulique exercée en amont du piston de la presse, soit sous l'action d'une force générée par des moyens mécaniques ou électriques.

On sait que de nombreux paramètres influent par ailleurs sur la valeur de la pression appliquée à la matière à l'intérieur du moule. Dans la pratique les presses de l'état antérieur de la technique comportent des moyens de contrôle de la pression hydraulique appliquée au piston et des moyens de mesure de la pression de la matière à l'intérieur du moule où l'on réalise l'injection. On sait également, qu'en régime de fonctionnement stable de la presse d'injection, on parvient ainsi, par la seule régulation de la pression du fluide hydraulique, à maintenir à l'intérieur d'une fourchette, satisfaisante dans certains cas, la pression de la matière à l'intérieur du moule, malgré l'influence de tous les paramètres techniques qui influent sur celle-ci, notamment les paramètres de fonctionnement de la machine.

Un tel régime de fonctionnement constant et régulier de la presse d'injection est maintenu tant qu'aucune perturbation notable ne se manifeste. Parmi les perturbations susceptibles de modifier le régime de fonctionnement de la presse on peut retenir, notamment les arrêts de celle-ci, qu'ils soient nécessaires au fonctionnement normal de la machine ou qu'ils soient accidentels, ainsi que l'influence exercée par les variations de température ou l'irrégularité de la matière elle-même dans le cas où l'on utilise une matière recyclée. Lorsque de telles perturbations surviennent au cours d'un cycle d'injection on sait qu'il est nécessaire de faire fonctionner ensuite l'installation pendant un temps plus ou moins long, qui dépend des caractéristiques de la presse et du matériau à mouler, avant de retrouver un nouveau régime de fonctionnement stable. De plus le niveau de ce nouveau régime de fonctionnement stable peut être très différent du niveau de stabilité antérieur, ce qui se traduit par des caractéristiques de produits moulés très différentes.

Pendant le temps de fonctionnement de la presse en régime perturbé on produit bien entendu un certain nombre de pièces qui, pour la plupart, ne remplissent pas les spécifications imposées, notamment en ce qui concerne leur masse et/ou leurs dimensions, si bien que de telles pièces sont destinées au rebut, ce qui représente à la fois une perte de temps et d'argent.

On connaît par le brevet JP-2208016 un système de contrôle des paramètres d'injection basé sur la déviation de mesures effectuées sur la pièce moulée et notamment sur le poids de celle-ci et sur une corrélation qui est établie entre ces mesures et les paramètres d'injection. Ce document ne mentionne toutefois pas les paramètres sur lesquels on doit intervenir pour mettre en oeuvre une telle corrélation.

La présente invention a pour but de remédier à ces inconvénients en proposant un moyen permettant de diminuer l'écart qui existe entre la masse, ou les dimensions, de produits respectivement obtenus avant et après une perturbation.

La présente invention permet ainsi de réduire le nombre de pièces mises au rebut en raison de différences par trop importantes de leur masse, et/ou de leurs dimensions, par rapport aux fourchettes des tolérances admises. Du fait de la diminution de l'écart ci-dessus mentionnée, le mouleur a la possibilité de prendre comme niveau de référence d'une fabrication la valeur correspondant à la plus faible valeur de la fourchette de tolérances sur la masse d'un produit, ce qui lui permet de réaliser des économies substantielles sur la quantité de matière utilisée.

La présente invention a ainsi pour objet un procédé de commande et de régulation d'une presse de moulage par injection, notamment de polymères, qui est actionnée par des moyens aptes à exercer sur la matière à mouler une force, dite force d'injection, qui comprend essentiellement deux phases, à savoir une phase de remplissage au cours de laquelle la matière à mouler est introduite dans le moule, qui est suivie d'une phase de maintien en pression, au cours de laquelle on applique à la matière une pression déterminée, caractérisé en ce qu'il comporte les étapes consistant à :

- établir des relations de corrélation respectives entre la masse, et/ou au moins l'une des dimensions, d'un produit moulé avec au moins certains paramètres de fonctionnement de la presse, à savoir d'une part la viscosité de la matière dans le moule, ou un paramètre corrélé avec celle-ci, et d'autre part, soit la pression de la matière dans le moule, soit la pression d'injection générant la force d'injection,
- effectuer un traitement, notamment statistique, de ces différentes relations de corrélation, afin de définir un modèle analytique exprimant la masse, et/ou ladite dimension, du produit moulé en fonction des susdits paramètres de fonctionnement,
- déduire de ce modèle analytique une loi de commande de la force qui doit être appliquée par la presse à la matière contenue dans le moule au cours de la phase de maintien en pression en fonction, soit de la pression de la matière dans le moule, soit de la pression d'injection,
- mesurer à chaque cycle d'injection les paramètres de fonctionnement de la presse, à savoir d'une part la viscosité de la matière dans le moule ou un paramètre corrélé avec celle-ci, et d'autre part, soit la pression de la matière dans le moule, soit la pression d'injection générant la force d'injection,

- commander la force appliquée par la presse à la matière au cours de la phase de maintien en pression à partir de ce modèle analytique.

Dans un mode de mise en oeuvre de l'invention les étapes d'établissement desdites relations de corrélation respectives, de réalisation dudit traitement statistique de ces différentes relations de corrélation, et d'établissement de ladite loi de commande de la force d'injection sont effectuées préalablement aux opérations de moulage. Préférablement les opérations de mesure des paramètres de fonctionnement de la presse sont réalisées pendant la phase de remplissage.

Dans un mode de mise en oeuvre de l'invention l'on prend en compte, dans les susdites étapes un paramètre de fonctionnement supplémentaire, à savoir la température de l'outillage.

Dans un autre mode de mise en oeuvre de l'invention on effectue, au cours de l'opération de moulage, un contrôle de la masse de produits moulés, et/ou d'au moins une dimension de ceux-ci, l'on établit une relation de corrélation entre la variation de la masse de ces produits, et/ou ladite dimension, par rapport à une valeur de référence avec, soit la pression de la matière dans le moule, soit la pression d'injection, de façon à apporter à la loi de commande de la force de maintien un terme de correction.

Préférentiellement la mesure de pression de la matière se fait à l'intérieur du moule dans lequel on réalise l'injection, notamment dans une zone de celui-ci proche d'un point d'injection. Cette mesure de pression peut également se faire en amont du moule, à l'intérieur de la buse d'injection, dans une zone de celle-ci proche de la sortie.

On décrira ci-après, à titre d'exemples non limitatifs, diverses formes d'exécution de la présente invention, en référence au dessin annexé sur lequel :

La figure 1 est une vue schématique d'un ensemble d'injection suivant l'état antérieur de la technique.

La figure 2 est un diagramme qui représente la variation de la masse des pièces obtenues par l'ensemble d'injection suivant l'état antérieur de la technique représenté sur la figure 1.

La figure 3 est une vue schématique d'un ensemble d'injection suivant l'invention.

Les figures 4, 5, 6 et 7 sont des diagrammes de quatre modes de mise en oeuvre de l'invention, représentent la variation de la masse des pièces obtenues par l'ensemble d'injection suivant l'invention, représenté sur la figure 3.

Les figures 8 à 10 sont des vues partielles en coupe de trois variantes de mise en oeuvre de l'invention.

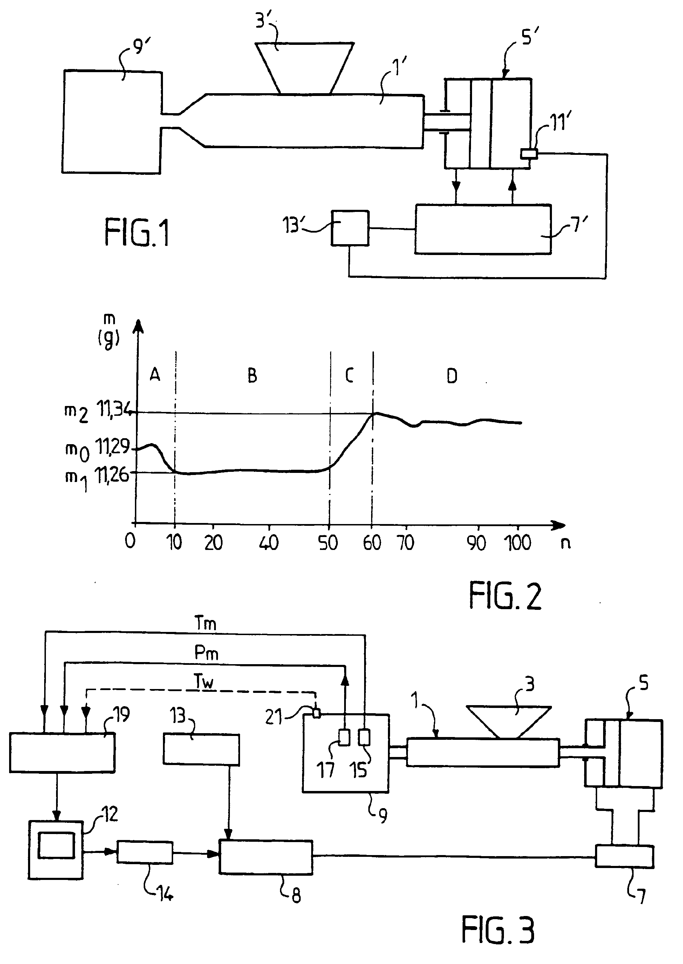

On a représenté sur la figure 1 un ensemble d'injection suivant l'état antérieur de la technique qui est constitué essentiellement d'une presse d'injection 1', d'une trémie de remplissage 3', destinée à assurer l'alimentation en matière première de la presse, d'un vérin hydraulique 5', dont l'actionnement est piloté par une servovalve 7', et d'un moule 9' dans lequel on injecte la matière sortant de la presse 1'.

La presse d'injection l'est pourvue de moyens d'asservissement constitués essentiellement d'un capteur de pression 11' qui est disposé dans le corps du vérin hydraulique 5', et d'un consigneur 13' qui reçoit d'une part une valeur de consigne de la pression de fonctionnement de la presse et d'autre part les informations communiquées par le capteur 11', le consigneur 13' étant en communication avec la servovalve 7'. En régime de fonctionnement normal, au cours du processus d'injection, le consigneur 13' reçoit du capteur 11' les informations relatives à la pression hydraulique Ph appliquée par le vérin 5', compare celles-ci à la valeur de consigne qui a été préalablement entrée dans le consigneur 13', et agit sur la servovalve 7' afin que celle-ci assure le maintien de la pression hydraulique $P_h$ à la valeur de consigne.

On a représenté sur la figure 2 un diagramme de fonctionnement d'une opération de moulage de pièces en polypropylène réalisée avec un tel ensemble d'injection. On a représenté sur cette figure la variation de la masse m (exprimée en grammes) des pièces moulées en fonction du nombre n des pièces réalisées au cours de cette opération de moulage. Ce schéma comporte plusieurs zones repérées de A à D.

La première zone A correspond à l'étape de mise en service de l'installation. On constate que la masse des pièces produites qui, à l'origine, est $m_0 = 11,29g$ augmente d'abord, passe par un maximum puis décroît jusqu'à une valeur $m_1 = 11,26g$ qui est atteinte au bout d'environ une dizaine de pièces, dans le présent exemple, pour se stabiliser ensuite par un palier. On se retrouve alors dans la zone B, où la masse $m_1 = 11,26g$ des pièces produites reste constante, ce qui correspond à un régime de fonctionnement stable de l'ensemble d'injection. Dans cette zone B on constate que la régulation effectuée exclusivement sur la valeur de la pression hydraulique $P_h$ de la presse l'est suffisante pour assurer, dans une fourchette de tolérances donnée, la régularité de fonctionnement de tout l'ensemble.

Dans la pratique, on constate que la masse $m_1$ des pièces produites reste constante tant qu'aucune perturbation notable n'intervient en cours de processus.

Cependant, on sait qu'au cours d'une opération d'injection la machine est soumise, plus ou moins de façon périodique, à diverses perturbations, telles que notamment des arrêts, voulus ou non, notamment pour modifier les paramètres d'injection ou pour changer la matière à injecter, par exemple pour modifier la couleur du produit injecté.

On a constaté que de telles perturbations avaient pour effet d'interrompre le régime de fonctionnement stable de la machine.

On a ainsi recréé, dans l'exemple décrit, une telle perturbation, en remplaçant, en cours de moulage, après la cinquantième pièce, le produit introduit dans la trémie 3' de la presse d'injection 1' avec une matière identique (à savoir du polypropylène) mais dont l'indice de fluidité passe de 5 à 12. On a ensuite repris le cours du processus de moulage et l'on se trouve alors dans la zone C.

On constate, ainsi que représenté sur la figure 2, que la masse m des pièces produites augmente alors pour atteindre, aux environs de la soixantième pièce, une nouvelle valeur palier $m_2 = 11,34g$.

On se trouve alors dans la zone D, et l'on constate que, bien que la masse $m_2$ des pièces moulées reste constante, cette masse est cependant supérieure à celle des pièces produites au cours du premier palier d'une valeur $\Delta m = m_2 - m_1 = 11,34 - 11,26 = 0,08g$, ce qui représente une variation de masse relative de 1%, ce qui est la plupart du temps supérieur au seuil acceptable dans le domaine industriel. Cette différence $\Delta m$ est en effet telle que de nombreuses pièces produites se trouveront hors des spécifications prévues au cahier des charges et devront ainsi être mises au rebut. Il en sera ainsi après chacune des perturbations qui seront susceptibles d'intervenir en cours de processus. Outre que cette augmentation de masse se traduit par des variations dimensionnelles des pièces produites qui peuvent les rendre inacceptables, elle implique également une augmentation non négligeable de la matière première consommée, ce qui représente un surcoût.

On doit ainsi convenir que la seule régulation de la pression hydraulique $P_h$ de la presse d'injection 1' n'est pas suffisante pour compenser les diverses perturbations qui se manifestent au cours d'une opération de moulage.

Bien entendu, dans la pratique, dès que l'utilisateur constate l'augmentation de poids des pièces produites, il intervient sur le réglage de la pression hydraulique $P_h$ commandant la presse pour pallier ce défaut. Cependant, un tel mode opératoire présente un premier inconvénient qui est de nécessiter une surveillance et une intervention manuelle d'un opérateur, et un second inconvénient qui est de produire, malgré une intervention si rapide qu'elle soit de celui-ci, des pièces hors normes puisque les réactions de l'installation se font avec une importante inertie.

Le procédé de régulation suivant l'invention se propose de pallier cet inconvénient et de rendre le diagramme de distribution de la masse des pièces produites plus régulier, même dans le cas de l'apparition d'une perturbation.

On décrira ci-après l'ensemble d'injection suivant l'invention en regard de la figure 3. Cet ensemble d'injection se compose d'une presse d'injection 1 qui est alimentée par une trémie de remplissage 3, d'un vérin hydraulique 5 dont l'actionnement est piloté par une servovalve 7 qui est elle-même contrôlée par une interface de régulation 8, et un moule 9 dans lequel est injectée la matière à mouler. Des moyens de calcul 12 pourvus d'une interface appropriée 14 sont en mesure d'une part d'enregistrer des données provenant de divers capteurs disposés sur l'ensemble d'injection et d'autre part d'adresser les consignes de fonctionnement à la servovalve 7 via l'interface de régulation 8. A l'intérieur du moule 9 on a disposé dans ce but plusieurs capteurs, à savoir un capteur 15 de la température $T_m$ du matériau injecté et un capteur 17 de la pression $P_m$ existant dans le moule 9. Ces capteurs sont reliés à une interface d'entrée 19 qui est reliée aux moyens de calcul 12, qui sont constitués notamment d'un micro-ordinateur.

Le procédé permettant de commander cet ensemble d'injection comporte une première étape qui consiste à établir, pour un produit à mouler donné, un matériel donné et un matériau spécifique à mouler donné, des relations de corrélation de divers paramètres du procédé qui ont une influence sur la géométrie de la pièce, et notamment la viscosité $\eta$ de la matière et la pression $P_m$ de celle-ci en cours de moulage, soit avec la masse m du produit moulé soit avec au moins une dimension 1 de ce produit. Ces relations de corrélation seront effectuées de façon expérimentale en réalisant des séries d'expériences spécifiques. On obtient ainsi les relations :

$$m = f(\eta) \quad \text{ou} \quad l = f(\eta) \qquad\qquad (1)$$

$$m = f(P_m) \quad \text{ou} \quad l = f(P_m) \qquad\qquad (2)$$

Sur le plan pratique la mesure de la viscosité sera effectuée à partir de la mesure de la pression $P_m$ et de la mesure de la température $T_m$ de la matière à l'intérieur du moule 9 qui sont des paramètres corrélés à la viscosité $\eta$. Ces mesures sont effectuées à l'aide des capteurs respectifs 17 et 15, et leurs valeurs respectives sont communiquées aux moyens de calcul 12 qui, au moyen de programmes spécifiques, établiront la valeur de la viscosité $\eta$.

Dans une seconde étape du procédé suivant l'invention on effectue un traitement, de préférence en l'espèce un traitement statistique, des différentes relations de corrélation obtenues précédemment, afin de définir un modèle analytique qui permet d'exprimer la masse de l'échantillon, ou une dimension 1 de celui-ci, par la fonction :

$$m=f(\eta,P_m) \quad \text{ou} \quad l=f(\eta,l_m) \qquad\qquad (3)$$

Dans une troisième étape du procédé suivant l'invention on déduit, de ce modèle analytique, la loi de pression de la matière injectée, notamment par une inversion de celui-ci. On obtient ainsi la fonction :

$$P_m=f(\eta,m) \quad \text{ou} \quad P_{m=}f(\eta,l) \qquad\qquad (4)$$

Cette fonction, qui représente la pression qui doit exister à chaque injection à l'intérieur du moule 9 pour que, tout au long de la production, et malgré les diverses perturbations qui se manifestent, la masse m des pièces produites, ou une dimension 1 de celles-ci, soit sensiblement constante, ne peut bien entendu pas être mise en oeuvre directement pour commander la presse hydraulique.

C'est pourquoi on fait appel à une interface de régulation 8, qui a été étalonnée de façon à appliquer au vérin hydraulique 5, par l'intermédiaire de la servovalve 7, la pression hydraulique $P_h$ adéquate pour obtenir dans le moule 9 une pression matière $P_m$ déterminée.

Ces trois premières étapes du procédé sont effectuées avant le lancement du processus de moulage. Ensuite on effectuera, de préférence avant le moulage de chacune des pièces, la mesure des paramètres de fonctionnement, à savoir la viscosité $\eta$ et la pression de la matière $P_m$. Préférentiellement cette opération sera effectuée en temps masqué, pendant l'étape de remplissage du moule 9.

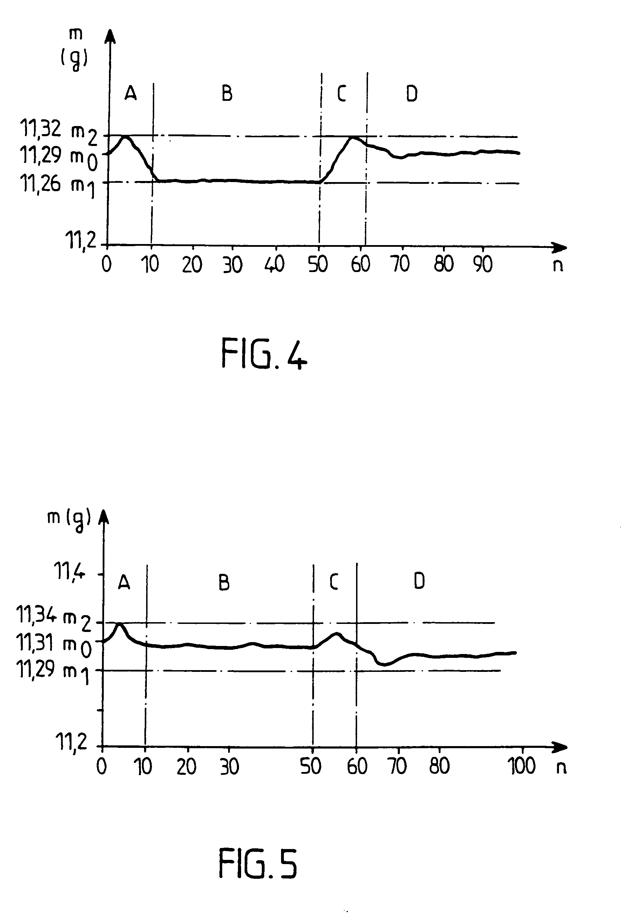

On a représenté sur la figure 4 un diagramme de fonctionnement, obtenu avec l'ensemble d'injection représenté sur la figure 3 qui est du même type que le diagramme représenté figure 2. Ce diagramme figure donc un processus d'injection de pièces identiques dans lequel, comme précédemment, on a fait intervenir, après le moulage de cinquante pièces, une perturbation identique. On constate, sur cette courbe de fonctionnement, que si la variation de la masse m des pièces qui se produit en début de fonctionnement de la presse, c'est-à-dire lors de la production des dix premières pièces, n'est guère modifiée, par contre la variation $\Delta m=m_2-m_1=11,32 - 11,26=0,06g$ de la masse des pièces qui est constatée entre les deux paliers correspondant au deux modes de fonctionnement stable avant et après une perturbation, est limitée par rapport à l'état antérieur de la technique. On constate ainsi que l'on passe d'un niveau de dispersion des pièces de 0,08g à un niveau de 0,06g, ce qui représente une amélioration d'environ 25%.

Les résultats fournis par le procédé suivant l'invention peuvent être améliorés en prenant en compte d'autres paramètres de fonctionnement, et notamment la température $T_w$ de l'outillage utilisé, c'est-à-dire principalement la température du moule et des moyens d'injection. Pour ce faire on adjoint aux capteurs précédemment mentionnés un capteur 21 (représenté en pointillés sur la figure 3) qui fournit à l'interface d'entrée 19 la température $T_w$ de l'outillage et notamment du moule 9.

Comme précédemment, on établit une relation de corrélation entre la température du moule $T_w$ et la masse m, ou l'une des dimensions 1 du produit moulé. Cette relation de corrélation est établie de façon expérimentale. On obtient ainsi la relation :

$$m=f(T_w) \quad \text{ou} \quad l=f(T_w) \qquad\qquad (6)$$

On effectue ensuite, comme exposé précédemment, un traitement, notamment de type statistique, des différentes corrélations obtenues afin de définir un nouveau modèle qui intègre le paramètre $T_w$ relatif à la température de l'outillage:

$$m=f(\eta,P_m,T_w) \quad \text{ou} \quad l=f(\eta,P_m,T_w) \qquad\qquad (7)$$

Comme précédemment, on déduit de ce modèle analytique la loi de pression de la matière injectée par inversion de celui-ci. On obtient ainsi la fonction :

$$P_m=f(\eta,m,T_w) \quad \text{ou} \quad P_m=f(\eta,l,T_w) \qquad\qquad (8)$$

qui représente la pression qui doit exister à chaque injection à l'intérieur du moule 9 pour que, tout au long de la production, et malgré les diverses perturbations qui se manifestent, la masse m, ou la dimension 1, des pièces produites soit sensiblement constante.

On a représenté sur la figure 5 un diagramme de fonctionnement similaire à ceux représentés sur les figures 2 et 4 qui montre un processus d'injection dans lequel, comme précédemment, on a fait intervenir, après le moulage de cinquante pièces, une perturbation identique aux précédentes.

On constate, sur ce diagramme de fonctionnement, qu'à la mise en service il ne subsiste qu'une légère variation de masse correspondant à un pic pour une masse $m_2 = 11,34g$ pour cinq pièces fabriquées. La masse des pièces produites redevient ensuite égale à la masse $m_0$ d'origine soit 11,31g.

On constate également que la variation de masse maximale qui se manifeste après la perturbation survenant en cours de moulage et qui était (après cinquante pièces comme précédemment dans l'exemple précédent), d'environ 0,06g, soit une variation relative de 0,5%, n'est plus désormais que de 0,05g soit une variation relative de 0,4%.

Au vu des résultats obtenus, représentés sur les schémas des figures 2, 4 et 5, on a établi les écarts types respectifs (E.T) obtenus par les méthodes conventionnelles et suivant l'invention.

- E.T par méthode conventionnelle (fig.2) : 0,028g
- E.T par méthode suivant l'invention ou méthode de régulation automatique (fig.4) : 0,015g
- E.T par méthode de régulation automatique avec correction de température de l'outillage (fig.5) : 0,009g

Le procédé suivant l'invention peut encore être affiné en introduisant une boucle de contrôle qui permet d'introduire dans la loi de commande de pression $P_m$ un terme correctif de faible poids (méthode adaptative). Ce terme correctif est basé sur la mesure de la masse des pièces produites, (et/ou l'une des dimensions du produit).

Ainsi on effectue, en cours de processus de moulage, de façon soit continue soit périodique, un contrôle de la masse des pièces produites, de façon à déterminer la différence de masse $\Delta m$ entre la masse de la pièce et la masse de consigne $m_0$.

$$\Delta m = (m - m_0) \qquad (9)$$

On établit ensuite, de façon expérimentale, la corrélation entre $\Delta m$ et $\Delta P_m$, c'est-à-dire la variation de pression qui doit être imposée à la pression matière $P_m$ pour rétablir une masse égale à la valeur de consigne $m_0$.

$$\Delta P_m = f(\Delta m) \qquad (10)$$

On obtient ainsi la pression $P_m$ c'est-à-dire la pression qui doit exister à l'intérieur du moule 9 pour que, tout au long du moulage, et malgré les diverses perturbations qui se manifestent, la masse m des pièces produites soit sensiblement constante.

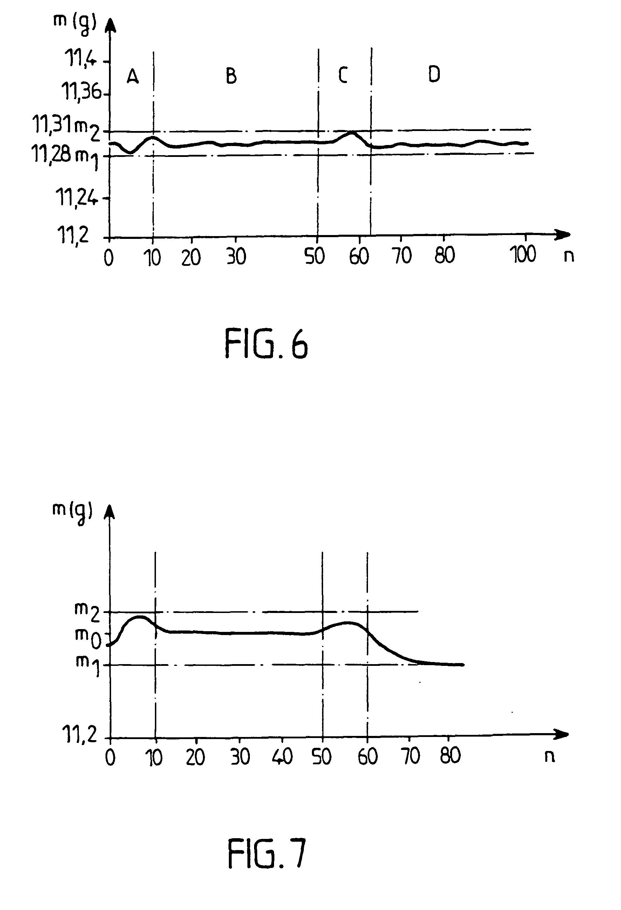

On a représenté sur la figure 6 un tel mode de mise en oeuvre qui est exprimé par un diagramme de fonctionnement similaire à ceux représentés sur les figures 2, 4 et 5 et qui montre un processus d'injection dans lequel, comme précédemment, on a fait intervenir, après le moulage de cinquante pièces, une perturbation identique aux précédentes.

Si l'on compare ce diagramme à celui de la figure 5 on constate, qu'à la mise en service, la variation de masse est légèrement atténuée et que la variation de masse maximale qui se manifestait après la perturbation survenant en cours de moulage et qui était d'environ 0,05g, soit une variation relative de 0,44%, n'est plus désormais que de $\Delta m = m_2 - m_1 = 11,31 - 11,28 = 0,03g$, soit une variation relative d'environ 0,26%.

Si l'on compare les écarts types respectivement obtenus par les méthodes conventionnelles (figure 2), par la méthode dite de régulation automatique (figure 4), par la méthode de régulation automatique avec correction de température (figure 5) et par la méthode dite adaptative (figure 6),

- E.T par méthode conventionnelle (fig.2)          0,028 g
- E.T par méthode de régulation automatique (fig.4)          0,015 g
- E.T par méthode de régulation automatique avec correction de température de l'outillage (fig.5)          0,009 g
- E.T par méthode adaptative (fig.6)          0,004 g

on constate que l'amélioration apportée, par rapport aux méthodes conventionnelles, par la méthode de régulation automatique est de l'ordre de 65% et lorsqu'elle est complétée par la méthode adaptative elle est de l'ordre de 85%.

Par ailleurs le fait de disposer, suivant l'invention, un capteur de pression dans le moule 9 est également intéressant en ce qu'il permet de contrôler le remplissage correct de celui-ci.

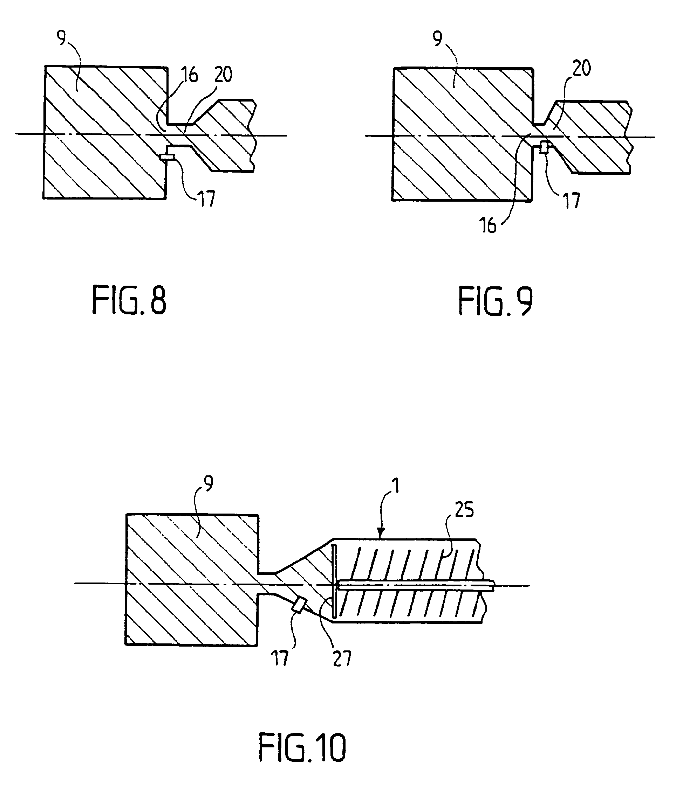

Ainsi, dans un mode de mise en oeuvre de l'invention, représenté sur la figure 8, on dispose le capteur de pression 17 au voisinage de la sortie 16 de la buse 20 avec laquelle on injecte la matière dans le moule 9. Ainsi, dès que le capteur 17 indique une montée en pression cela signifie que la matière injectée dans le moule comprime celui-ci et donc que le moule est rempli de matière.

On peut également, suivant l'invention, ainsi que représenté sur la figure 9, disposer le capteur de pression 17 non pas dans le moule 9 mais à l'intérieur de la buse d'injection 20, à proximité de la sortie 16 de celle-ci. On peut également, comme représenté sur la figure 10, disposer le capteur 17, dans le nez de la presse d'injection 1, en aval de la vis d'injection 25 et du clapet anti-retour 27 de celle-ci. De tels mode de mise en oeuvre sont particulièrement intéressants en ce qu'ils permettent de réaliser un contrôle de la pression de la matière sans qu'il soit nécessaire pour autant de disposer le capteur 7 à l'intérieur du moule 9, ce qui est techniquement intéressant car l'on peut ainsi disposer d'une presse qui comporte l'ensemble des commandes de régulation.

Ces moyens de détection de fin d'étape de remplissage du moule peuvent être préférentiellement en communication avec des moyens de temporisation qu'ils déclenchent dès que le moule 9 est rempli.

De tels moyens de temporisation sont intéressants en ce qu'ils permettent à l'ensemble des moyens électroniques assurant la commande du processus de moulage de se réinitialiser. La nécessité d'une telle réinitialisation est d'autant plus forte lorsque l'on passe, comme c'est habituellement le cas, d'une logique de régulation calée sur la vitesse (lors de la phase de remplissage du moule) à une logique de régulation calée sur la pression (lors de la phase de maintien en compression).

On a décrit précédemment un processus de régulation d'un ensemble de moulage qui est réalisé à partir de la pression $P_m$ de la matière injectée dans le moule, ou dans une zone proche de celui-ci. Cependant la présente invention peut également être mise en oeuvre à partir de la force d'injection qui, dans ce cas particulier, revient au contrôle de la pression hydraulique $P_h$ qui est appliquée à la matière à injecter. Pour ce faire on établit comme précédemment, de façon expérimentale ou analytique, les relations :

$$m=f(\eta) \qquad \text{ou} \quad l=f(\eta) \qquad\qquad (1')$$

$$m=f(P_h) \qquad \text{ou} \quad l=f(P_h) \qquad\qquad (2')$$

puis

$$m=f(\eta,P_h) \quad \text{ou} \quad l=f(P_h) \qquad\qquad (3')$$

et enfin la fonction $P_h$ qui représente la pression hydraulique à appliquer à la matière pour que tout au long de la production et malgré les diverses perturbations qui se manifestent, la masse m des pièces produites ou au moins l'une de leurs dimensions soient sensiblement constantes :

$$P_h=f(\eta,m) \qquad\qquad (4')$$

On a représenté sur la figure 7 un diagramme de fonctionnement du même type que ceux représentés précédemment. On constate sur celui-ci que la variation $\Delta m = m2-m1 = 11{,}32-11{,}26 = 0{,}06g$ de la masse des pièces qui est constatée entre deux modes de fonctionnement stables avant et après une perturbation est limitée par rapport à l'état antérieur de la technique. On constate ainsi que l'on passe d'un niveau de dispersion des pièces de 0,08g à un niveau de 0,06g, ce qui représente une amélioration d'environ 25%.

Comme précédemment, on peut bien entendu appliquer la correction due à la température $T_w$ de l'outillage $P_h = f(\eta,m,T_w)$ éventuellement complétée du terme correctif provenant du contrôle continu ou régulier de la masse m des pièces produites, ou d'au moins l'une de leurs dimensions.

**Revendications**

1. Procédé de commande et de régulation d'une presse de moulage par injection, notamment de polymères, qui est actionnée par des moyens (5) aptes à exercer sur la matière à mouler une force, dite force d'injection, qui comprend essentiellement deux phases, à savoir une phase de remplissage, au cours de laquelle la matière à mouler est introduite dans le moule, qui est suivie d'une phase de maintien en pression, au cours de laquelle on applique à la matière une pression déterminée, **caractérisé en ce qu'**il comporte les étapes consistant à :

   - établir des relations de corrélation respectives entre la masse (m), et/ou au moins l'une des dimensions (1), d'un produit moulé avec au moins certains paramètres de fonctionnement de la presse, à savoir d'une part la viscosité ($\eta$) de la matière dans le moule (9) ou un paramètre ($T_m$, $P_m$) corrélé avec celle-ci, et d'autre part, soit la pression ($P_m$) de la matière dans le moule, soit la pression d'injection ($P_h$) générant la force d'injection,
   - effectuer un traitement, notamment statistique, de ces différentes relations de corrélation, afin de définir un modèle analytique exprimant la masse (m), et/ou ladite dimension (1), du produit moulé en fonction des susdits paramètres de fonctionnement ($\eta, T_m, P_m, P_h$),
   - déduire de ce modèle analytique une loi de commande de la force qui doit être appliquée par la presse à la matière contenue dans le moule au cours de la phase de maintien en pression en fonction, soit de la pression ($P_m$) de la matière dans le moule, soit de la pression d'injection ($P_h$),
   - mesurer à chaque cycle d'injection les paramètres de fonctionnement de la presse, à savoir d'une part la viscosité ($\eta$) de la matière dans le moule, ou un paramètre ($P_m, T_m$) corrélé à celle-ci, et d'autre part, soit la pression ($P_m$) de la matière dans le moule, soit la pression d'injection générant la force d'injection,
   - commander la force appliquée par la presse à la matière au cours de la phase de maintien en pression à partir de ce modèle analytique.

2. Procédé suivant la revendication 1 **caractérisé en ce que** les étapes d'établissement desdites relations de corrélation respectives, de réalisation dudit traitement statistique de ces différentes relations de corrélation, et d'établissement de ladite loi de commande de la force d'injection sont effectuées préalablement aux opérations de moulage.

3. Procédé suivant l'une des revendications 1 ou 2 **caractérisé en ce que** les opérations de mesure des paramètres de fonctionnement de la presse ($\eta, T_m, P_m, P_h, T_w$) sont réalisées pendant la phase de remplissage.

4. Procédé suivant l'une des revendications précédentes **caractérisé en ce que** l'on prend en compte dans les susdites étapes un paramètre de fonctionnement supplémentaire, à savoir la température ($T_w$) de l'outillage.

5. Procédé suivant l'une des revendications précédentes **caractérisé en ce que** l'on effectue, au cours de l'opération de moulage, un contrôle de la masse (m) de produits moulés, et/ou d'au moins une dimension (1) de ceux-ci, l'on établit une relation de corrélation entre la variation ($\Delta m$) de la masse (m) de ces produits, et/ou de ladite dimension (1), par rapport à une valeur de référence ($m_o, l_o$) avec, soit la pression ($P_m$) de la matière dans le moule, soit la pression d'injection ($P_h$), de façon à apporter à la loi de commande de la force de maintien un terme de correction.

**Claims**

1. A method for controlling and regulating an injection molding press, notably for polymers, which is actuated by means (5) capable of exerting on the material to be molded, a force, a so-called injection force, which essentially comprises two phases, i.e., a filling phase, during which the material to be molded is introduced into the mold, which is followed by a pressure holding phase, during which a determined pressure is applied to the material, **characterized in that** it includes the steps of:

   - establishing respective correlation relationships between the mass (m), and/or at least one of the dimensions (1), of a molded product with at least certain operating parameters of the press, i.e., the viscosity ($\eta$) of the material in the mold (9) or a parameter ($T_m$, $P_m$) correlated with the latter on the one hand, and either the pressure ($P_m$) of the material in the mold or the injection pressure ($P_h$) generating the injection force,
   - performing a notably statistical processing operation on these different correlation relationships, in order to define an analytical model expressing the mass (m), and/or said dimension (1) of the molded product as a function of the aforesaid operating parameters ($\eta$, $T_m$, $P_m$, $P_h$),
   - inferring from this analytical model, a law for controlling the force which should be applied by the press to the material contained in the mold during the pressure holding phase as a function either of the pressure ($P_m$) of

the material in the mold or the injection pressure ($P_h$),

- measuring at each injection cycle, the operating parameters of the press, i.e., the viscosity ($\eta$) of the material in the mold or a parameter ($P_m$, $T_m$,) correlated with the latter on the one hand, and either the pressure ($P_m$) of the material in the mold, or the injection pressure generating the injection force,

- controlling the force applied by the press to the material during the pressure holding phase from this analytical model.

2.  The method according to claim 1, **characterized in that** the steps for establishing said respective correlation relationships, for performing said statistical processing operation on these different correlation relationships, and for establishing said law for controlling the injection force are performed prior to the molding operations.

3.  The method according to any one of claims 1 or 2, **characterized in that** the operations for measuring the operating parameters of the press ($\eta$, $T_m$, $P_m$, $P_h$, $T_w$) are performed during the filling phase.

4.  The method according to any of the preceding claims, **characterized in that** an additional operating parameter, i.e., the temperature ($T_w$) of the tooling, is taken into account in the aforesaid steps.

5.  The method according to any of the preceding claims, **characterized in that** checking the mass (m) of molded products and/or at least one dimension (1) of the latter is performed during the molding operation, a correlation relationship is established between the variation ($\Delta m$) of the mass (m) of these products and/or of said dimension (1) relatively to a reference value ($m_0$,$l_0$) either with the pressure ($P_m$) of the material in the mold, or the injection pressure ($P_h$) so as to provide the law for controlling the holding force with a correction term.

**Patentansprüche**

1.  Verfahren zum Steuern und Regeln einer Spritzgießpresse, insbesondere für Polymere, die durch eine Einrichtung (5) betrieben wird, die zur Ausübung einer als Einspritzkraft bezeichneten Kraft auf das zu gießende Material ausgebildet ist, welches im Wesentlichen zwei Phasen umfasst, und zwar eine Befüllungsphase, in deren Verlauf das zu gießende Material in die Gussform eingebracht wird, gefolgt von einer Druckhaltephase, in deren Verlauf auf das Material ein bestimmter Druck aufgebracht wird, **dadurch gekennzeichnet, dass** es folgende Schritte beinhaltet:

    - Herstellen jeweiliger Korrelationsbeziehungen der Masse (m) und/oder mindestens einer der Abmessungen (1) eines gegossenen Produktes zu zumindest gewissen Betriebsparametern der Presse, nämlich zum einen der Viskosität ($\eta$) des Materials in der Gussform (9) oder eines zu ihr korrelierten Parameters ($T_m$, $P_m$), und zum anderen entweder dem Druck ($P_m$) des Materials in der Gussform oder dem die Einspritzkraft erzeugenden Einspritzdruck ($P_h$),
    - Durchführen einer insbesondere statistischen Behandlung dieser verschiedenen Korrelationsbeziehungen, um ein analytisches Modell zu definieren, mittels dem die Masse (m) und/oder die Abmessung (1) des gegossenen Produktes in Abhängigkeit von diesen Betriebsparametern ($\eta$, $T_m$, $P_m$, $P_h$) ausgedrückt wird,
    - Ableiten eines Steuerungsgesetzes aus diesem analytischen Modell für die Kraft, die durch die Presse auf das in der Gussform enthaltene Material im Verlauf der Druckhaltephase aufgebracht werden soll, und zwar in Abhängigkeit vom Druck ($P_m$) des Materials in der Form oder vom Einspritzdruck ($P_h$),
    - Messen der Betriebsparameter der Presse bei jedem Einspritzzyklus, nämlich zum einen der Viskosität ($\eta$) des Materials in der Form oder eines zu dieser korrelierten Parameters ($P_m$, $T_m$), und zum anderen des Druckes ($P_m$) des Materials in der Form oder des die Einspritzkraft erzeugenden Einspritzdruckes,
    - Steuern der durch die Presse auf das Material ausgeübten Kraft während der Druckhaltephase ausgehend von diesem analytischen Modell.

2.  Verfahren nach Anspruch 1, **dadurch gekennzeichnet, dass** die Schritte, bei denen die jeweiligen Korrelationsbeziehungen aufgestellt werden, die statistische Behandlung dieser verschiedenen Korrelationsbeziehungen durchgeführt wird und das Steuerungsgesetz für die Einspritzkraft aufgestellt wird, vor den Gießoperationen durchgeführt werden.

3.  Verfahren nach einem Ansprüche 1 oder 2, **dadurch gekennzeichnet, dass** die Operationen zum Messen der Betriebsparameter der Presse ($\eta$, $T_m$, $P_m$, $P_h$, $T_w$) während der Befüllungsphase durchgeführt werden.

4. Verfahren nach einem der vorhergehenden Ansprüche, **dadurch gekennzeichnet, dass** bei den genannten Schritten ein zusätzlicher Funktionsparameter berücksichtigt wird, und zwar die Temperatur ($T_w$) des Werkzeugs.

5. Verfahren nach einem der vorhergehenden Ansprüche, **dadurch gekennzeichnet, dass** im Verlauf der Formungsoperation eine Kontrolle der Masse (m) der gegossenen Produkte und/oder mindestens einer Abmessung (l) von diesen durchgeführt wird und eine Korrelationsbeziehung zwischen der Änderung ($\Delta$m) der Masse (m) dieser Produkte und/oder der Abmessung (1), bezogen auf einen Referenzwert ($m_0$, $l_0$), und entweder dem Druck ($P_m$) des Materials in der Form oder dem Einspritzdruck ($P_h$) aufgestellt wird, so dass dem Haltekraft-Steuerungsgesetz ein Korrekturterm hinzugefügt wird.

FIG.1

FIG.2

FIG.3

FIG.4

FIG.5

FIG.6

FIG.7

FIG.8

FIG.9

FIG.10